# EUROPÄISCHE PATENTSCHRIFT

(11) **EP 3 869 077 B1**
(45) Veröffentlichungstag und Bekanntmachung des Hinweises auf die Patenterteilung: **24.09.2025**
(21) Anmeldenummer: 21157764.8
(22) Anmeldetag: 18.02.2021
(51) Int. Cl.: F16L 21/035, F16L 25/14, F16L 47/06, F16L 47/26

(54) **ROHRADAPTER**
TUBE ADAPTER
ADAPTATEUR DE TUBE

(30) Priorität: 18.02.2020 DE 102020201987
(43) Veröffentlichungstag der Anmeldung: 25.08.2021
(60) Teilanmeldung: 25195665.2
(73) Patentinhaber: Fernco GmbH, 37269 Eschwege (DE)
(72) Erfinder: Jordan, Arne, 37269 Eschwege (DE)
(74) Vertreter: Wohlfahrt, Jan Günther

(56) Entgegenhaltungen:
- US-A1- 2002 153 725
- US-A1- 2010 117 356
- US-A1- 2011 133 446

## Beschreibung

Die vorliegende Erfindung betrifft einen Rohradapter zum Verbinden zweier Rohrenden oder zum Verbinden eines Rohrendes an ein Bohrloch.

Rohradapter zum Verbinden zweier Rohre sind allgemein bekannt. Dabei sind auch Rohradapter bekannt, bei denen mindestens eine Seite in ein Rohrende, insbesondere auch ein Spitzende eines Rohres eingeschoben wird und nicht als Muffe auf das Rohr aufgeschoben wird. Dies ist insbesondere dann nötig, wenn die Außenseite des Rohrendes ungleichmäßig und nicht rund ist oder nicht zugänglich ist, beispielsweise wenn sich das Rohrende in einer Wand befindet. Solche Rohradapter gibt es beispielsweise als Gummimanschette, die auf einer Seite in ein Rohr eingeschoben wird und auf der anderen Seite als Muffe ausgebildet ist, in die ein Rohr geschoben wird und mit einer Spannschelle gesichert wird. Weiterhin sind komplexere Rohradapter bekannt, bei denen mehrteilige Vorrichtungen notwendig sind, beispielsweise Gitterkörbe und Dichtmanschetten, und bei denen zwingend Spannschellen verwendet werden müssen. Alternativ kann auch der Einsatz von Spreitzkeilen vorgesehen sein, wobei das Einschlagen des Keils zu Schäden am Bohrloch führen kann. Auch muss der Keil nach der Montage abgeflext werden.

Grundsätzlich sind diese Adapter aus dem Stand der Technik nur für einen waagerechten Einbau gedacht.

US 2011/133446 A1, US 2002/153725 A1 und US 2010/117356 A1 offenbaren bereits bekannte Rohradapter.

Das der vorliegenden Erfindung zugrunde liegende technische Problem ist die Bereitstellung eines Rohradapters, der die Nachteile aus dem Stand beseitigt. Das der vorliegenden Erfindung zugrunde liegende technische Problem ist die Bereitstellung eines Rohradapters, der mindestens auf einer Seite in ein Rohr gesteckt werden kann und der einen einfachen und dennoch sicheren Aufbau aufweist. Insbesondere soll bei dem Rohradapter auf möglichst viele Zubehörteile, wie beispielsweise Rohrschellen, verzichtet werden können. Der Rohradapter soll auch für einen senkrechten Einbau geeignet sein. Der Anschluss des zweiten Rohres soll dabei flexibel sein.

Die vorliegende Erfindung löst das ihr zugrunde liegende Problem insbesondere durch einen Rohradapter nach Anspruch 1 bzw. 4.

Es zeigte sich überraschender Weise, dass ein Rohradapter, der mit dem ersten Rohrende mit einer Ummantelung in herkömmlicher Weise in ein Rohr eingeschoben werden kann, mit einem zweiten Rohrende ausgestattet werden kann, das als Spitzende ausgestaltet ist und dieser einfache Aufbau zu einer flexiblen und dennoch sicheren Verbindung zweier Rohre genutzt werden kann. Dabei kann durch den im Inneren konisch geformten Mittelabschnitt der zweite, mit einem Spitzende ausgestattete Rohrabschnitt in einen gewünschten Rohrdurchmesser, insbesondere Außendurchmesser geführt werden, der insbesondere einem genormten Außendurchmesser entspricht, sodass eine einfache Verbindung mit einer Muffe des zweiten Rohrs möglich ist. In vorteilhafter Weise kann dabei der im Inneren konusförmige Mittelabschnitt mit einer weichen, insbesondere abgerundeten und flachen Steigung ausgestaltet sein, sodass an der Verbindungsstelle eventuelle, in der durch das Rohr geleiteten Flüssigkeit befindlichen Feststoffe an der Rohrvergrößerung nicht absetzen.

Erfindungsgemäß handelt es sich bei den Rohren, die mit dem Rohradapter verbunden werden, um Wasserrohre oder Abwasserrohre. Bevorzugt sind die Rohre Abwasserrohre. Bevorzugt sind die Rohre Kunststoffrohre.

Es zeigte sich weiterhin überraschender Weise, dass der erfindungsgemäße Rohradapter trotz seines einfachen Aufbaus nicht nur horizontal sondern auch senkrecht eingebaut werden kann und keine Fließrichtung des Mediums beachtet werden muss, sich also die konische Form des Mittelabschnitts in Richtung des zweiten Rohrendes verbreitern oder verjüngen kann.

Darüber hinaus lässt die Ausgestaltung des zweiten Endes als Spitzende in vorteilhafter Weise eine Verbindung des zweiten Rohres nicht nur über die Muffe des zweiten Rohres zu, sondern das zweite Rohr kann auch auf andere Art und Weise, wie weiter unten beschrieben, mit dem Rohradapter verbunden werden, was eine flexible Handhabung zulässt.

In einer bevorzugten Ausführungsform besteht der Rohradapter aus dem Rohr und der Ummantelung.

In dieser Ausführungsform besteht also der erfindungsgemäße Rohradapter nur aus dem Rohr mit dem konischen Mittelabschnitt und der Ummantelung, also nur aus zwei Teilen, die einfach und preiswert hergestellt werden können. Dieser einfache Aufbau aus zwei Teilen ermöglicht auch eine unkomplizierte Verwendung des Rohradapters.

In einer bevorzugten Ausführungsform besteht das Rohr aus Kunststoff oder aus Metall, bevorzugt aus Kunststoff.

Dem Fachmann sind geeignete Materialien für das Rohrstück bekannt. Das Rohr kann in einfacher und kostengünstiger Art und Weise mit herkömmlichen Methoden und aus einem einzigen Material hergestellt werden.

In einer bevorzugten Ausführungsform weist die Ummantelung mindestens eine Dichtlippe auf.

Die Ummantelung dient in vorteilhafter Weise der dichten Verbindung des ersten Rohrabschnitts mit dem Rohr oder Bohrloch, in das der erste Rohrabschnitt des Adapters eingeschoben wird. Dabei ist bevorzugt mindestens eine Dichtlippe vorgesehen, die um die Ummantelung herumläuft und einen etwaigen Zwischenraum zwischen Ummantelung und Innenoberfläche des Rohrs oder des Bohrlochs abdichtet. Mögliche Ausgestaltungen sind dem Fachmann hinlänglich bekannt.

Die Ummantelung kann beispielsweise als Dichtring, insbesondere mit angefügter Dichtlippe, oder als Dichtmanschette, insbesondere mit angefügter Dichtlippe, ausgeführt sein. In einer bevorzugten Ausführungsform weist die Dichtmanschette eine Länge auf, die der Länge des ersten Rohrabschnitts bis zum oder in den Mittelabschnitt entspricht. Bevorzugt bedeckt also die Ummantelung den ersten Rohrabschnitt weitestgehend vollständig, insbesondere vom ersten Rohrende bis zum Mittelabschnitt oder in diesen hinein, oder bis zu einem fakultativen Außenring. Die Ummantelung kann auch mehrere Dichtlippen aufweisen, die sich über die Länge der Ummantelung verteilen.

In einer bevorzugten Ausführungsform weist die Ummantelung eine Dichtlippe auf. In einer alternativen Ausführungsform weist die Ummantelung Dichtlippen auf, beispielsweise 2 bis 15 Dichtlippen, insbesondere 4 bis 13 Dichtlippen. Der Fachmann kann eine geeignete Anzahl von Dichtlippen vorsehen. Je größer der Außendurchmesser des ersten Rohrabschnitts ist, desto mehr Dichtlippen sind vorteilhaft.

In einer bevorzugten Ausführungsform weist die Ummantelung um Bereich des ersten Rohrendes eine Fahne auf, also einen Abschnitt, der über das Rohrende hinaussteht und sich an die Innenseite des ersten Rohrs anlegen kann.

Geeignete Materialien für die Ummantelung sind dem Fachmann bekannt. In einer bevorzugten Ausführungsform besteht die Ummantelung aus Ethylen-Propylen-Dien-Kautschuk, einem thermoplastischen Elastomer oder Polyvinylchlorid.

Erfindungsgemäß weist der Mittelabschnitt des Rohrs einen Außenring auf, an den die Ummantelung anliegt. Erfindungsgemäß ist der Außenring eine Einschlagbegrenzung.

So kann der Außenring des Rohres beim Einschieben beziehungsweise Einschlagen des ersten Rohrabschnitts mit der Ummantelung in das erste Rohr oder in ein Bohrloch als Begrenzung dienen, die bei richtiger Einführtiefe an das Ende des ersten Rohres oder die Außenseite des Bohrlochs anschlägt und ein weiteres Einschieben des Adapters in das erste Rohr beziehungsweise in das Bohrloch verhindert.

Bevorzugt weist die Ummantelung an einem Ende einen Außenring auf, der an dem Außenring des Rohres anliegt. Wenn die Ummantelung ebenfalls einen Außenring aufweist, wird dadurch das Andrücken des Rohraußenrings in vorteilhafter Weise abgefedert.

Der Mittelabschnitt des Adapterrohrs weist erfindungsgemäß auf der Innenseite des Rohrs eine konusförmige Ausgestaltung auf, durch die der Innendurchmesser des Rohrs vergrößert beziehungsweise verkleinert wird.

In einer bevorzugten Ausführungsform weisen der erste Rohrabschnitt mit dem ersten Rohrende und der zweite Rohrabschnitt mit dem zweiten Rohrende unterschiedliche Außendurchmesser auf. Auf der Außenseite kann der Außendurchmesser des Rohrs im Mittelbereich also ebenfalls vergrößert oder verkleinert werden. Dabei ist eine Durchmesseränderung des Außendurchmessers im Mittelbereich beispielsweise durch einen ebenfalls konusförmigen Abschnitt außen möglich oder durch eine Kante. Bevorzugt wird der Außendurchmesser des Rohrs durch eine Kante verändert. Bevorzugt liegt der Außenring an dieser Kante.

Der Außendurchmesser des ersten Rohrabschnitts und auch des ersten Rohrendes ist so gewählt, dass der erste Rohrabschnitt mit der abdichtenden Ummantelung einen solchen Durchmesser aufweist, dass der erste Rohrabschnitt mit der Ummantelung dicht in das erste Rohr oder in das Bohrloch eingeschoben werden kann. Der Außendurchmesser des zweiten Rohrabschnitts und somit auch des zweiten Rohrendes ist so gewählt, dass er dem Außendurchmesser eines handelsüblichen Kunststoffrohrs entspricht. Durch die Durchmesseränderung im Mittelbereich ist eine Anpassung auf einen solchen Durchmesser in vorteilhafter Weise möglich. Somit weist der Rohradapter mit dem zweiten Rohrabschnitt ein zweites Rohrende in Form eines Spitzendes auf, wobei der Außendurchmesser des zweiten Rohrabschnitts dem Außendurchmesser eines handelsüblichen Kunststoffrohrs entspricht.

Ein solcher Rohrabschnitt mit einem solchen Ende als Anschlussstück eignet sich in vorteilhafter Weise für einen einfachen und gleichzeitig flexiblen Anschluss des zweiten Rohrs. Beispielsweise kann ein handelsübliches zweites Kunststoffrohr mit seiner Muffe auf das Spitzende aufgeschoben werden. Alternativ kann ein Spitzende des zweiten Rohrs mit einer Doppelmuffe an den Rohradapter verbunden werden. Auch kann das Spitzende eines zweiten Rohrs mit einer Universalmanschette, einer Standardmanschette oder einer Adapterkupplung mit dem zweiten Rohrende des Rohradapters verbunden werden. Auch ist es möglich, dass ein zweites Rohr mit geringerem Außendurchmesser mit der Innenseite des zweiten Rohrendes des Rohradapters zu verbinden, beispielsweise mit Hilfe einer Gliederkette oder einer innen liegenden Manschette. Somit bietet die erfindungsgemäße Ausführungsform des zweiten Rohrendes als Spitzende eine einfache und flexible Handhabung, da das angeformte Spitzende ein Rohrstück simuliert, welches den exakten Außendurchmesser eines handelsüblichen Kunststoffrohrs aufweist. Es zeigte sich überraschender Weise, dass dennoch eine sichere Verbindung des Adapters mit dem zweiten Rohr gewährleistet ist und somit der Adapter nicht zwingend nur waagerecht eingebaut werden kann, sondern auch schräg oder senkrecht.

Geeignete Außendurchmesser für den zweiten Rohrabschnitt mit dem zweiten Rohrende sind dem Fachmann bekannt. Dies gilt insbesondere für Kunststoffrohre. Rohrdimensionen für Kunststoffrohre sind in der jeweiligen gültigen Produktnorm festgelegt, beispielsweise in der DIN 8062 für Kunststoffdruckrohre aus PVC-U mit Steckmuffe.

Für Rohre wird häufig eine bestimmte Nennweite DN verwendet, aus der sich für den Fachmann ein spezifischer Außendurchmesser ergibt.

Bevorzugt entspricht der Außendurchmesser des zweiten Rohrabschnitts mit dem zweiten Rohrende eines Kunststoffabwasserrohrs mit der Nennweite DN 50, DN 65, DN 80, DN 100, DN 125, DN 150, DN 200, DN 250, DN 300, DN 400, DN 500 oder DN 600.

Bevorzugt ergibt sich der entsprechende Außendurchmesser aus der DIN 8062 und der DIN EN ISO 1452-2.

In einer bevorzugten Ausführungsform beträgt der Außendurchmesser des zweiten Rohrendes 110 mm, 125 mm, 140 mm, 160 mm, 200 mm, 225 mm, 250 mm, 280 mm, 315 mm, 355 mm, 400 mm, 450 mm, 500 mm, 560 mm oder 630 mm, 710 mm, 800 mm, 900 mm oder 1000 mm.

Der Außendurchmesser bezieht sich bevorzugt auf den Hauptteil des zweiten Rohrabschnitts, nicht zwingend auf den Außendurchmesser des zweiten Rohrendes, da dem Fachmann bekannt ist, ein Rohrende und das ans Rohrende direkt angrenzende Rohrstück insbesondere bei Kunststoffrohren mit einem etwas geringeren Außendurchmesser zu versehen, insbesondere denn Außendurchmesser schräg zu verkleinern, um eine gute Einführbarkeit in eine Muffe zu gewährleisten.

Es kann auch vorgesehen sein, den Innendurchmesser im zweiten Rohrabschnitt zum zweiten Rohrende hin leicht zu vergrößern.

Die vorliegende Erfindung löst das ihr zugrunde liegende Problem bevorzugt auch durch eine alternative Ausführungsform des erfindungsgemäßen Rohradapters zum Verbinden zweier Rohrenden oder eines Rohrendes an ein Bohrloch, wobei der Rohradapter ein Rohr mit einem ersten Rohrabschnitt mit einem ersten Rohrende und mit einem zweiten Rohrabschnitt mit einem zweiten Rohrende umfasst, wobei das erste Rohrende als Spitzende ausgebildet ist und eine Ummantelung aus einem elastischen Material aufweist und wobei auch das zweite Rohrende als Spitzende ausgebildet ist und eine Ummantelung aus einem elastischen Material aufweist.

In dieser Ausführungsform weist der Rohradapter also zwei Ummantelungen auf, die jeweils in ein Rohr eingeschoben werden können.

Diese Ausgestaltungsform des Rohradapters erlaubt es Rohre, wie z.B. Kunststoff -, Guss- und Stahlrohre mit unterschiedlichen Außendurchmessern über die Rohrinnenfläche zu verbinden, zum Beispiel wenn aus unterschiedlichsten Gründen keine normale Manschettendichtung um Einsatz kommen kann.

In einer bevorzugten Ausführungsform weist der Mittelabschnitt des Rohrs einen Außenring auf, an den die zwei Ummantelungen anliegen. In einer bevorzugten Ausführungsform ist der Außenring eine Einschlagbegrenzung.

In dieser bevorzugten Ausführungsform kann der Außenring des Rohres beim Einschieben beziehungsweise Einschlagen des ersten Rohrabschnitts mit der ersten Ummantelung in das erste Rohr oder in ein Bohrloch als Begrenzung dienen, die bei richtiger Einführtiefe an das Ende des ersten Rohres oder die Außenseite des Bohrlochs anschlägt und ein weiteres Einschieben des Adapters in das erste Rohr beziehungsweise in das Bohrloch verhindert. Danach kann der Außenring auch als Begrenzung beim Einschieben des zweiten Rohrabschnitts mit der zweiten Ummantelung in das zweite Rohr dienen.

Bevorzugt weisen die zwei Ummantelungen an einem Ende jeweils einen Außenring auf, der an dem Außenring des Rohres anliegt. Wenn die Ummantelungen ebenfalls jeweils einen Außenring aufweisen, wird dadurch das Andrücken des Rohraußenrings in vorteilhafter Weise abgefedert.

Der erste Rohrabschnitt mit dem ersten Rohrende und der zweite Rohrabschnitt mit dem zweiten Rohrende können den gleichen Außendurchmesser oder einen unterschiedlichen Außendurchmesser aufweisen. Somit kann diese Ausführungsform des Adapters zum Verbinden von Rohren mit gleichem Innendurchmesser oder zum Verbinden von Rohren mit unterschiedlichem Innendurchmesser verwendet werden.

Bevorzugt weist diese Ausführungsform keinen Mittelabschnitt mit einer konusförmigen Innenseite auf.

Weitere bevorzugte Ausgestaltungen dieser Ausführungsform mit zwei Ummantelungen ergeben sich für den Fachmann aus den bevorzugten Ausgestaltungen für die Ausführungsform, bei der das erste Rohrende als Spitzende ausgebildet ist und eine Ummantelung aus einem elastischen Material aufweist und wobei das zweite Rohrende als Spitzende ausgebildet ist und die bevorzugt einen Mittelabschnitt mit einer konusförmigen Innenseite aufweist. Die vorliegende Erfindung betrifft auch die Verwendung eines erfindungsgemäßen Rohradapters zum Verbinden eines ersten Rohrs oder einer Bohrung mit einem zweiten Rohr, wobei das erste Rohrende des Rohradapters mit der Ummantelung in das erste Rohr oder eine Bohrung gesteckt wird, wobei das zweite Rohrende des Rohradapters mit dem zweiten Rohr verbunden wird, wobei
a) das zweite Rohr eine Muffe aufweist, die auf das zweite Rohrende des Rohradapters geschoben wird, oder
b) ein Spitzende des zweiten Rohrs mit einer Doppelmuffe mit dem zweiten Rohrende des Rohradapters verbunden wird, oder
c) ein Spitzende des zweiten Rohrs mit einer Universalmanschette, einer Standardmanschette oder einer Adapterkupplung mit dem zweiten Rohrende des Rohradapters verbunden wird, oder
d) das zweite Rohr mit der der Innenseite zweiten Rohrende des Rohradapters verbunden wird, insbesondere durch eine Gliederkette oder eine innenliegende Manschette.

Die vorliegende Erfindung betrifft auch ein Kit of Parts, umfassend einen erfindungsgemäßen Rohradapter und eine Gebrauchsanleitung, in der mindestens zwei der erfindungsgemäßen Verwendungsarten a), b), c) oder d) erläutert werden.

Die vorliegende Erfindung betrifft auch die Verwendung der alternativen Ausführungsform des erfindungsgemäßen Rohradapters mit zwei Ummantelungen zum Verbinden eines ersten Rohrs oder einer Bohrung mit einem zweiten Rohr, wobei das erste Rohrende des Rohradapters mit der ersten Ummantelung in das erste Rohr oder eine Bohrung gesteckt wird, wobei das zweite Rohrende des Rohradapters mit dem zweiten Rohr verbunden wird, wobei das zweite Rohrende des Rohradapters mit der zweiten Ummantelung in das zweite Rohr oder eine Bohrung gesteckt wird. Die vorliegende Erfindung betrifft auch ein Kit of Parts, umfassend die alternative Ausführungsform des erfindungsgemäßen Rohradapters und eine Gebrauchsanleitung.

Bevorzugt wird in der Gebrauchsanleitung die Verwendungsart a) und mindestens eine weitere Verwendungsart b) bis d) erläutert. Bevorzugt wird in der Gebrauchsanleitung erläutert, dass der Rohradapter nicht zwingend waagerecht verwendet werden muss, sondern auch gegebenenfalls schräg oder senkrecht verwendet werden kann.

Weitere bevorzugte Ausführungsformen ergeben sich aus den Figuren und den Unteransprüchen, ohne dass diese einschränkend zu verstehen wären.

Es zeigt:
- Figur 1: einen erfindungsgemäßen Rohradapter in Schrägansicht;
- Figur 2: das Rohr und die Ummantelung eines erfindungsgemäßen Rohradapters;
- Figur 3: eine alternative Ausführungsform des erfindungsgemäßen Rohradapter zum Verbinden von zwei Rohren mit gleichem Innendurchmesser;
- Figur 4: eine alternative Ausführungsform des erfindungsgemäßen Rohradapter zum Verbinden von zwei Rohren mit unterschiedlichem Innendurchmesser.

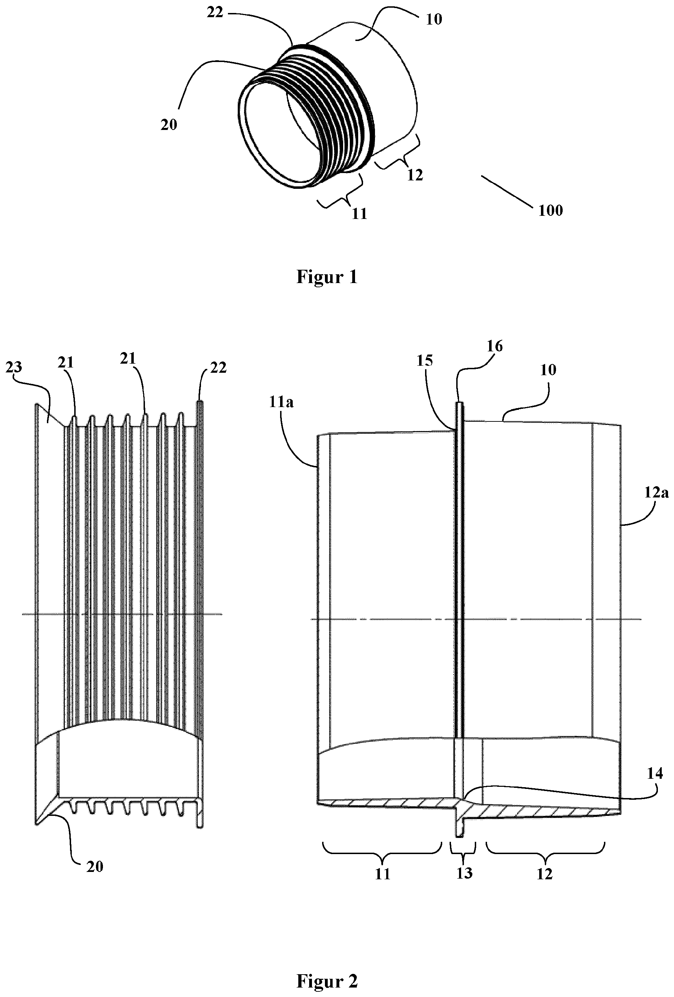

Figur 1 zeigt einen erfindungsgemäßen Rohradapter (100), der aus einem Rohr (10) und einer Ummantelung (20) besteht. Der gezeigt Rohradapter eignet sich für einen Anschluss von Kunststoffabwasserrohren mit einem DN 125. Die Ummantelung (20) ist auf das Rohr (10) im Bereich des ersten Rohrabschnitts (11) geschoben. Dieser erste Rohrabschnitt (11) kann mit der Ummantelung (20) in ein Rohr oder ein Bohrloch eingeschoben werden. Ein Außenring am Rohr (10) in Kombination mit einem Außenring (22) an der Ummantelung verhindert in vorteilhafter Weise, dass der Adapter zu weit in das erste Rohr oder das Bohrloch hineingeschoben wird. In einem kurzen Mittelabschnitt des Rohrs (10) vergrößert sich sowohl der Innendurchmesser als auch der Außendurchmesser, sodass der zweite Rohrabschnitt (12) des Rohrs einen größeren Außendurchmesser aufweist, der exakt dem Außendurchmesser eines Kunststoffabwasserrohrs und dessen Spitzende entspricht. Dieser zweite Rohrabschnitt (12) kann in vorteilhafter Weise flexibel und einfach mit einem zweiten Rohr verbunden werden, beispielsweise durch Aufschieben eines Muffenendes des zweiten Rohrs auf den zweiten Rohrabschnitt (12) oder mittels Doppelmuffe, Universalmanschette, Standardmanschette, Adapterkupplung oder durch Einschieben des zweiten Rohrs in den zweiten Rohrabschnitt (12).

Das Rohrelement (10) ist aus Kunststoff gefertigt, kann aber beispielsweise auch aus Metall bestehen. Die Ummantelung (20) ist aus einem elastischen Material, beispielsweise Ethylen-Propylen-Dien-Kautschuk, einem thermoplastischen Elastomer oder aus Polyvinylchlorid gefertigt.

Figur 2 zeigt die beiden Bestandteile des erfindungsgemäßen Rohradapters, nämlich das Rohrelement (10) und die Ummantelung (20) getrennt voneinander. Das Rohrelement (10) unterteilt sich in einen ersten Rohrabschnitt (11) mit einem ersten Spitzende (11a) und einem zweiten Rohrabschnitt (12) mit einem zweiten Spitzende (12a), die durch einen Mittelabschnitt (13) voneinander getrennt sind. Der Mittelabschnitt (13) weist eine konusförmige Innenseite (14) auf, durch die der Innendurchmesser vom ersten Abschnitt (11) zum zweiten Abschnitt (12) hin vergrößert wird. Der Außendurchmesser vergrößert sich vom ersten Rohrabschnitt (11) zum zweiten Rohrabschnitt (12) Mittelabschnitt (13) durch eine Kante (15). Im Bereich der Kante (15) des Mittelabschnitts (13) ist ein Außenring (16) vorhanden, der zum einen ein Verschieben der Ummantelung (20) in Richtung des zweiten Rohrabschnitts (12) verhindert und zum anderen als Einschlagbegrenzung dient. Im Bereich des ersten Spitzendes (11a) und des zweiten Spitzendes (12a) sind die entsprechenden Rohrabschnitte (11, 12) leicht angeschrägt, so dass zum einen die Ummantelung (20) leichter auf den ersten Rohrabschnitt (11) geschoben werden kann und zum anderen der zweite Rohrabschnitt (12) leichter in die Muffe eines zweiten Rohrs eingeführt werden kann. Auch ist die Innenseite des zweiten Rohrabschnitts (12) leicht angeschrägt, so dass sich der Innendurchmesser zum zweiten Rohrende (12a) hin leicht vergrößert.

Die Ummantelung (20) weist hier sieben Dichtlippen (21) auf, die eine dichte Verbindung mit dem ersten Rohr oder dem Bohrloch gewährleisten. Bei anderen Außendurchmessern des ersten Rohrabschnitts kann die Anzahl der Dichtlippen angepasst werden. Weiterhin weist die Ummantelung (20) einen Außenring (22) auf, der am Außenring (16) des Rohrelements (10) anliegt und als Abfederung der Einschlagsbegrenzung dienen kann. Am anderen Ende weist die Ummantelung (20) eine Fahne (23) auf, die beim Einschieben in das erste Rohr oder das Bohrloch an dessen Innenwand gedrückt wird und einen sanften Übergang zwischen Rohr und Rohradapter ermöglicht.

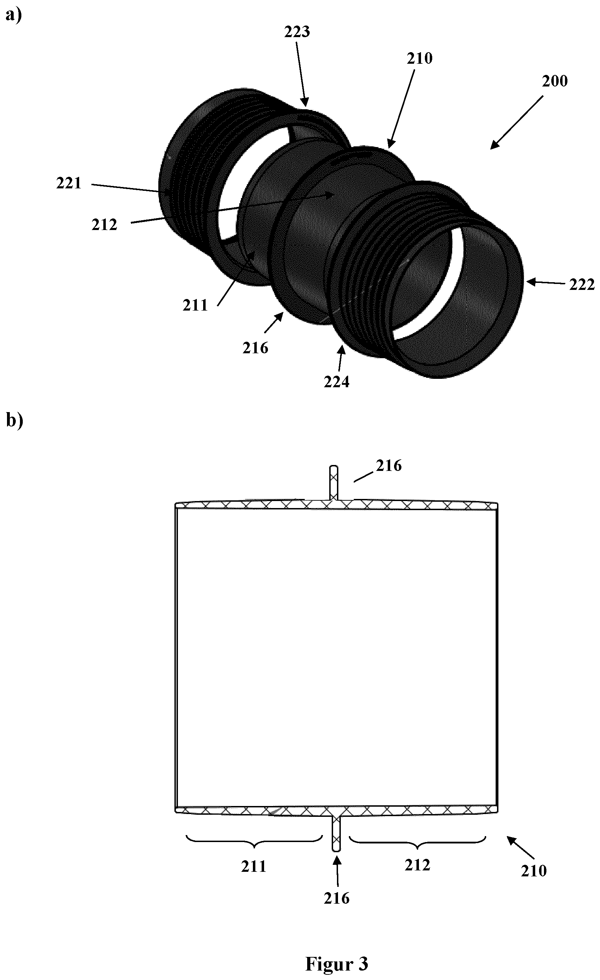

Figur 3 zeigt eine alternative Ausführungsform (200) des erfindungsgemäßen Rohradapters zum Verbinden von zwei Rohren mit gleichem Innendurchmesser. In Figur 3a ist der gesamte Rohradapter (200) zu sehen, der aus einem Rohr (210), einer ersten Ummantelung (221) und einer zweiten Ummantelung (222) besteht. In Figur 3b ist nur das Rohr (210) im Querschnitt zu sehen. Die erste Ummantelung (221) wird auf das Rohr (210) im Bereich des ersten Rohrabschnitts (211) geschoben. Dieser erste Rohrabschnitt (211) kann mit der Ummantelung (221) in ein Rohr oder ein Bohrloch eingeschoben werden. Die zweite Ummantelung (222) wird auf das Rohr (210) im Bereich des zweiten Rohrabschnitts (212) geschoben. Dieser zweite Rohrabschnitt (212) kann mit der Ummantelung (222) auch in ein Rohr oder ein Bohrloch eingeschoben werden. Ein Außenring (216) am Rohr (210) in Kombination mit einem Außenring (223) an der ersten Ummantelung (221) und einem Außenring (224) an der zweiten Ummantelung (222) verhindert in vorteilhafter Weise, dass der Adapter (200) zu weit in das erste und/oder zweite Rohr oder das Bohrloch hineingeschoben wird.

Das Rohrelement (210) ist aus Kunststoff gefertigt, kann aber beispielsweise auch aus Metall bestehen. Die Ummantelungen (221/222) sind aus einem elastischen Material, beispielsweise Ethylen-Propylen-Dien-Kautschuk, einem thermoplastischen Elastomer oder aus Polyvinylchlorid gefertigt.

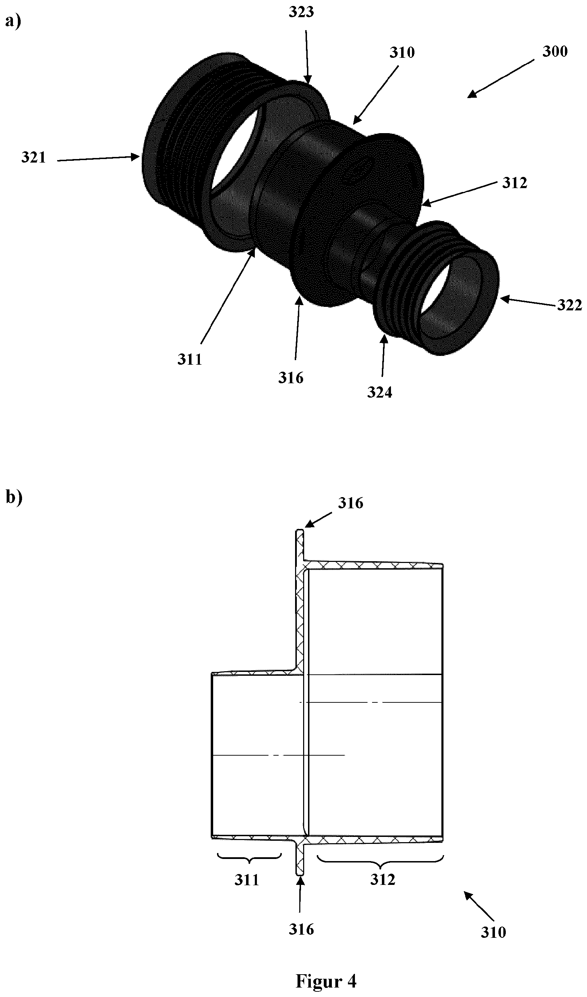

Figur 4 zeigt eine alternative Ausführungsform (300) des erfindungsgemäßen Rohradapters zum Verbinden von zwei Rohren mit unterschiedlichem Innendurchmesser. In Figur 4a ist wieder der gesamte Rohradapter (300) zu sehen, der aus einem Rohr (310), einer ersten Ummantelung (321) und einer zweiten Ummantelung (322) besteht. In Figur 4b ist nur das Rohr (310) im Querschnitt zu sehen. Die erste Ummantelung (321) wird auf das Rohr (310) im Bereich des ersten Rohrabschnitts (311) geschoben, wobei die erste Ummantelung (321) und der erste Rohrabschnitt (311) einen größeren Durchmesser aufweisen. Dieser erste Rohrabschnitt (311) kann mit der Ummantelung (321) in ein Rohr oder ein Bohrloch mit entsprechend großem Durchmesser eingeschoben werden. Die zweite Ummantelung (322) wird auf das Rohr (310) im Bereich des zweiten Rohrabschnitts (312) geschoben, wobei die zweite Ummantelung (322) und der zweite Rohrabschnitt (312) einen kleineren Durchmesser aufweisen. Dieser zweite Rohrabschnitt (312) kann mit der Ummantelung (322) in ein Rohr oder ein Bohrloch mit entsprechend kleinerem Durchmesser eingeschoben werden. Ein Außenring (316) am Rohr (310) in Kombination mit einem Außenring (323) an der ersten Ummantelung (321) und einem Außenring (324) an der zweiten Ummantelung (322) verhindert in vorteilhafter Weise, dass der Adapter (300) zu weit in das erste und/oder zweite Rohr oder das Bohrloch hineingeschoben wird.

## Patentansprüche

1. Rohradapter (100, 200, 300) zum Verbinden zweier Rohrenden von Wasserrohren oder Abwasserrohren oder eines Rohrendes eines Wasserrohrs oder Abwasserrohrs an ein Bohrloch, wobei der Rohradapter (100, 200, 300) ein Rohr (10, 210, 310) mit einem ersten Rohrabschnitt (11, 211, 311) mit einem ersten Rohrende und mit einem zweiten Rohrabschnitt (12, 212, 312) mit einem zweiten Rohrende umfasst, wobei das erste Rohrende als Spitzende (11a) ausgebildet ist und eine Ummantelung (20, 221, 222, 321, 322) aus einem elastischen Material aufweist und wobei das Rohr (10) zwischen erstem Rohrabschnitt (11, 211, 311) und zweitem Rohrabschnitt (12, 212, 312) einen Mittelabschnitt (13) aufweist, **dadurch gekennzeichnet,**
**dass** der Mittelabschnitt (13) des Rohrs (10, 210, 310) einen Außenring (16, 216, 316) aufweist, an den die Ummantelung (20) anliegt, wobei der Außenring (16, 216, 316) eine Einschlagbegrenzung ist und wobei die Ummantelung (20, 221, 222, 321, 322) eine Fahne (23) im Bereich des ersten Rohrendes (11a) aufweist.

2. Rohradapter (100, 200, 300) nach Anspruch 1, **dadurch gekennzeichnet, dass** das zweite Rohrende als Spitzende ausgebildet (12a) ist.

3. Rohradapter (100, 200, 300) nach einem der vorhergehenden Ansprüche, **dadurch gekennzeichnet, dass** der Mittelabschnitt (13) eine konusförmige Innenseite (14) aufweist.

4. Rohradapter (100, 200, 300) zum Verbinden zweier Rohrenden von Wasserrohren oder Abwasserrohren oder eines Rohrendes eines Wasserrohrs oder Abwasserrohrs an ein Bohrloch, bevorzugt nach einem der vorhergehenden Ansprüchen, wobei der Rohradapter (100, 200, 300) ein Rohr (10, 210, 310) mit einem ersten Rohrabschnitt (11, 211, 311) mit einem ersten Rohrende und mit einem zweiten Rohrabschnitt (12, 212, 312) mit einem zweiten Rohrende umfasst, wobei das Rohr zwischen erstem Rohrabschnitt (11, 211, 311) und zweitem Rohrabschnitt (12, 212, 312) einen Mittelabschnitt (13) mit einer konusförmigen Innenseite (14) aufweist und wobei das erste Rohrende (11, 211, 311) als Spitzende (11a) ausgebildet ist und eine Ummantelung (20, 221, 222, 321, 322) aus einem elastischen Material aufweist, wobei das zweite Rohrende (12) als Spitzende (12a) ausgebildet ist, **dadurch gekennzeichnet, dass** der Mittelabschnitt (13) des Rohrs (10, 210, 310) einen Außenring (16, 216, 316) aufweist, an den die Ummantelung (20) anliegt, wobei der Außenring (16, 216, 316) eine Einschlagbegrenzung ist und wobei die Ummantelung (20) an einem Ende einen Außenring (22) aufweist, der an dem Außenring des Rohres (16, 216, 316) anliegt.

5. Rohradapter nach Anspruch 4, **dadurch gekennzeichnet, dass** der Rohradapter (100) aus dem Rohr (10, 210, 310) und der Ummantelung (20) besteht.

6. Rohradapter (100, 200, 300) nach einem der Ansprüche 1 bis 4, **dadurch gekennzeichnet, dass** das erste Rohrende als Spitzende (11a) ausgebildet ist und eine Ummantelung (221, 321) aus einem elastischen Material aufweist und wobei auch das zweite Rohrende als Spitzende (12a) ausgebildet ist und eine Ummantelung (222, 322) aus einem elastischen Material aufweist.

7. Rohradapter (100, 200, 300) nach einem der vorhergehenden Ansprüche, **dadurch gekennzeichnet, dass** das erste Rohrende (311) und das zweite Rohrende (312) unterschiedliche Außendurchmesser aufweisen und/oder dass der erste Rohrabschnitt (311) und der zweite Rohrabschnitt (312) unterschiedliche Außendurchmesser aufweisen.

8. Rohradapter (100, 200, 300) nach einem der vorhergehenden Ansprüche, **dadurch gekennzeichnet, dass** die Ummantelung (20, 221, 222, 321, 322) mindestens eine Dichtlippe (21), bevorzugt mehrere Dichtlippen (21) aufweist.

9. Rohradapter (100, 200, 300) nach einem der vorhergehenden Ansprüche, **dadurch gekennzeichnet, dass** die Ummantelung (20, 221, 222, 321, 322) aus Ethylen-Propylen-Dien-Kautschuk, einem thermoplastischen Elastomer oder Polyvinylchlorid besteht.

10. Rohradapter (100, 200, 300) nach einem der vorhergehenden Ansprüche, **dadurch gekennzeichnet, dass** der Außendurchmesser des zweiten Rohrabschnitts (12, 212, 312) 110 mm, 125 mm, 140 mm, 160 mm, 200 mm, 225 mm, 250 mm, 280 mm, 315 mm, 355 mm, 400 mm, 450 mm, 500 mm, 560 mm oder 630 mm, 710 mm, 800 mm, 900 mm oder 1000 mm beträgt.

11. Rohradapter (100, 200, 300) nach einem der vorhergehenden Ansprüche, **dadurch gekennzeichnet, dass** das Rohr (10, 210, 310) aus Kunststoff oder aus Metall besteht.

12. Verwendung eines Rohradapters (100, 200, 300) nach einem der vorhergehenden Ansprüche zum Verbinden eines ersten Rohrs oder einer Bohrung mit einem zweiten Rohr, wobei das erste Rohrende des Rohradapters mit der Ummantelung in das erste Rohr oder eine Bohrung gesteckt wird, **dadurch gekennzeichnet, dass** das zweite Rohrende (12, 212, 312) des Rohradapters (100, 200, 300) mit dem zweiten Rohr verbunden wird, wobei
a) das zweite Rohr eine Muffe aufweist, die auf das zweite Rohrende (12, 212, 312) des Rohradapters (100, 200, 300) geschoben wird, oder
b) ein Spitzende des zweiten Rohrs mit einer Doppelmuffe mit dem zweiten Rohrende (12, 212, 312) des Rohradapters (100, 200, 300) verbunden wird, oder
c) ein Spitzende des zweiten Rohrs mit einer Universalmanschette, einer Standardmanschette oder einer Adapterkupplung mit dem zweiten Rohrende (12, 212, 312) des Rohradapters verbunden wird, oder
d) das zweite Rohr mit der der Innenseite des zweiten Rohrendes (12, 212, 312) des Rohradapters (100, 200, 300) verbunden wird, insbesondere durch eine Gliederkette oder eine innenliegende Manschette.

13. Kit of Parts, umfassend einen Rohradapter (100, 200, 300) nach einem der Ansprüche 1 bis 11 und eine Gebrauchsanleitung, in der mindestens zwei der Verwendungsarten a), b), c) oder d) nach Anspruch 12 erläutert werden.

14. Verwendung eines Rohradapters (100, 200, 300) nach Anspruch 6, wobei das erste Rohrende des Rohradapters mit der ersten Ummantelung in das erste Rohr oder eine Bohrung gesteckt wird, wobei das zweite Rohrende (12, 212, 312) des Rohradapters mit dem zweiten Rohr verbunden wird, wobei das zweite Rohrende des Rohradapters mit der zweiten Ummantelung in das zweite Rohr oder eine Bohrung gesteckt wird.

## Claims

1. A pipe adapter (100, 200, 300) for connecting two pipe ends of water pipes or sewage pipes or one pipe end of a water pipe or sewage pipe to a borehole, wherein the pipe adapter (100, 200, 300) comprises a pipe (10, 210, 310) having a first pipe section (11, 211, 311) having a first pipe end and a second pipe section (12, 212, 312) having a second pipe end, wherein the first pipe end is configured as a spigot end (11a) and has a sheath (20, 221, 222, 321, 322) of an elastic material, and wherein the pipe (10) has a middle section (13) between the first pipe section (11, 211, 311) and the second pipe section (12, 212, 312), **characterised in that** the middle section (13) of the pipe (10, 210, 310) has an outer ring (16, 216, 316) against which the sheath (20) abuts, wherein the outer ring (16, 216, 316) is a knock-in limiter and wherein the sheath (20, 221, 222, 321, 322) has a flag (23) in the region of the first pipe end (11a).

2. The pipe adapter (100, 200, 300) of claim 1, **characterised in that** the second pipe end is configured as a spigot end (12a).

3. The pipe adapter (100, 200, 300) of one of the preceding claims, **characterised in that** the middle section (13) has a conical inner side (14).

4. A pipe adapter (100, 200, 300) for connecting two pipe ends of water pipes or sewage pipes or one pipe end of a water pipe or sewage pipe to a borehole, preferably of one of the preceding claims, wherein the pipe adapter (100, 200, 300) comprises a pipe (10, 210, 310) having a first pipe section (11, 211, 311) having a first pipe end and a second pipe section (12, 212, 312) having a second pipe end, wherein the pipe has a middle section (13) between the first pipe section (11, 211, 311) and the second pipe section (12, 212, 312) having a conical inner side (14) and wherein the first pipe end (11, 211, 311) is configured as a spigot end (11a) and has a sheath (20, 221, 222, 321, 322) of an elastic material, wherein the second pipe end (12) is configured as a spigot end (12a), **characterised in that** the middle section (13) of the pipe (10, 210, 310) has an outer ring (16, 216, 316) against which the sheath (20) abuts, wherein the outer ring (16, 216, 316) is a knock-in limiter and wherein the sheath (20) has at one end an outer ring (22) which abuts against the outer ring of the pipe (16, 216, 316).

5. The pipe adapter of claim 4, **characterised in that** the pipe adapter (100) consists of the pipe (10, 210, 310) and the sheath (20).

6. The pipe adapter (100, 200, 300) of one of claims 1 to 4, **characterised in that** the first pipe end is configured as a spigot end (11a) and has a sheath (221, 321) of an elastic material, and wherein the second pipe end is also configured as a spigot end (12a) and has a sheath (222, 322) of an elastic material.

7. The pipe adapter (100, 200, 300) of one of the preceding claims, **characterised in that** the first pipe end (311) and the second pipe end (312) have different outer diameters and/or that the first pipe section (311) and the second pipe section (312) have different outer diameters.

8. The pipe adapter (100, 200, 300) of one of the preceding claims, **characterised in that** the sheath (20, 221, 222, 321, 322) has at least one sealing lip (21), preferably several sealing lips (21).

9. The pipe adapter (100, 200, 300) of one of the preceding claims, **characterised in that** the sheath (20, 221, 222, 321, 322) consists of ethylene-propylene-diene rubber, a thermoplastic elastomer or polyvinyl chloride.

10. The pipe adapter (100, 200, 300) of one of the preceding claims, **characterised in that** the outer diameter of the second pipe section (12, 212, 312) is 110 mm, 125 mm, 140 mm, 160 mm, 200 mm, 225 mm, 250 mm, 280 mm, 315 mm, 355 mm, 400 mm, 450 mm, 500 mm, 560 mm or 630 mm, 710 mm, 800 mm, 900 mm or 1000 mm.

11. The pipe adapter (100, 200, 300) of one of the preceding claims, **characterised in that** the pipe (10, 210, 310) consists of plastic or metal.

12. A use of a pipe adapter (100, 200, 300) of one of the preceding claims for connecting a first pipe or a bore with a second pipe, wherein the first pipe end of the pipe adapter is inserted with the sheath into the first pipe or a bore, **characterised in that** the second pipe end (12, 212, 312) of the pipe adapter (100, 200, 300) is connected to the second pipe, wherein
a) the second pipe has a sleeve which is pushed onto the second pipe end (12, 212, 312) of the pipe adapter (100, 200, 300), or
b) a spigot end of the second pipe is connected to the second pipe end (12, 212, 312) of the pipe adapter (100, 200, 300) by means of a double sleeve, or
c) a spigot end of the second pipe is connected to the second pipe end (12, 212, 312) of the pipe adapter by means of a universal collar, a standard collar or an adapter coupling, or
d) the second pipe is connected to the inner side of the second pipe end (12, 212, 312) of the pipe adapter (100, 200, 300), in particular by means of a link chain or an internal collar.

13. A kit of parts comprising a pipe adapter (100, 200, 300) of one of claims 1 to 11 and an instruction manual in which at least two of the types of use a), b), c) or d) of claim 12 are explained.

14. A use of a pipe adapter (100, 200, 300) of claim 6, wherein the first pipe end of the pipe adapter is inserted with the first sheath into the first pipe or a bore, wherein the second pipe end (12, 212, 312) of the pipe adapter is connected to the second pipe, wherein the second pipe end of the pipe adapter is inserted with the second sheath into the second pipe or a bore.

## Revendications

1. Un adaptateur de tube (100, 200, 300) pour connecter deux extrémités de tubes de tubes d'eau ou de tubes d'égout ou une extrémité de tube d'un tube d'eau ou d'un tube d'égout à un trou de forage, dans lequel l'adaptateur de tube (100, 200, 300) comprend un tube (10, 210, 310) ayant une première section de tube (11, 211, 311) ayant une première extrémité de tube et une deuxième section de tube (12, 212, 312) ayant une deuxième extrémité de tube, dans lequel la première extrémité de tube est configurée comme une extrémité pointure (11a) et a une gaine (20, 221, 222, 321, 322) en un matériau élastique, et dans lequel le tube (10) a une section médiane (13) entre la première section de tube (11, 211, 311) et la deuxième section de tube (12, 212, 312), **caractérisé en ce que** la section médiane (13) du tube (10, 210, 310) a une bague extérieure (16, 216, 316) contre laquelle la gaine (20) vient en butée, dans lequel la bague extérieure (16, 216, 316) est une buttée de braquage et dans lequel la gaine (20, 221, 222, 321, 322) a un languette (23) dans la région de la première extrémité de tube (11a).

2. L'adaptateur de tube (100, 200, 300) selon la revendication 1, **caractérisé en ce que** l'extrémité de tube est configurée comme une extrémité pointure (12a).

3. L'adaptateur de tube (100, 200, 300) selon l'une des revendications précédentes, **caractérisé en ce que** la section médiane (13) a une face intérieure conique (14).

4. Un adaptateur de tube (100, 200, 300) pour connecter deux extrémités de tubes de tubes d'eau ou de tubes d'égout ou une extrémité de tube d'une tube d'eau ou d'un tube d'égout à un trou de forage, préférablement selon l'une des revendications précédentes, dans lequel l'adaptateur de tube (100, 200, 300) comprend un tube (10, 210, 310) ayant une première section de tube (11, 211, 311) ayant une première extrémité de tube et une deuxième section de tube (12, 212, 312) ayant une deuxième extrémité de tube, dans lequel le tube a une section médiane (13) entre la première section de tube (11, 211, 311) et la deuxième section de tube (12, 212, 312) ayant une face intérieure conique (14) et dans lequel la première extrémité de tube (11, 211, 311) est configurée comme une extrémité pointure (11a) et a une gaine (20, 221, 222, 321, 322) en un matériau élastique, dans lequel la deuxième extrémité de tube (12) est configurée comme une extrémité pointure (12a), **caractérisé en ce que** la section médiane (13) du tube (10, 210, 310) a une bague extérieure (16, 216, 316) contre laquelle la gaine (20) vient en butée, dans lequel la bague extérieure (16, 216, 316) est une buttée de braquage et dans lequel la gaine (20) a à une extrémité une bague extérieure (22) qui vient en butée contre la bague extérieure du tube (16, 216, 316).

5. L'adaptateur de tube selon la revendication 4, **caractérisé en ce que** l'adaptateur de tube (100) est constitué du tube (10, 210, 310) et de la gaine (20).

6. L'adaptateur de tube (100, 200, 300) selon l'une des revendications 1 à 4, **caractérisé en ce que** la première extrémité de tube est configurée comme une extrémité pointure (11a) et a une gaine (221, 321) en un matériau élastique, et dans lequel la deuxième extrémité de tube est également configurée comme une extrémité pointure (12a) et a une gaine (222, 322) en un matériau élastique.

7. L'adaptateur de tube (100, 200, 300) selon l'une des revendications précédentes, **caractérisé en ce que** la première extrémité de tube (311) et la deuxième extrémité de tube (312) ont des diamètres extérieurs différents et/ou **en ce que** la première section de tube (311) et la deuxième section de tube (312) ont des diamètres extérieurs différents.

8. L'adaptateur de tube (100, 200, 300) selon l'une des revendications précédentes, **caractérisé en ce que** la gaine (20, 221, 222, 321, 322) a au moins une lèvre d'étanchéité (21), préférablement plusieurs lèvres d'étanchéité (21).

9. L'adaptateur de tube (100, 200, 300) selon l'une des revendications précédentes, **caractérisé en ce que** la gaine (20, 221, 222, 321, 322) est constituée de caoutchouc éthylène-propylène-diène, d'un élastomère thermoplastique ou de chlorure de polyvinyle.

10. L'adaptateur de tube (100, 200, 300) selon l'une des revendications précédentes, **caractérisé en ce que** le diamètre extérieur de la deuxième section de tube (12, 212, 312) est de 110 mm, 125 mm, 140 mm, 160 mm, 200 mm, 225 mm, 250 mm, 280 mm, 315 mm, 355 mm, 400 mm, 450 mm, 500 mm, 560 mm ou 630 mm, 710 mm, 800 mm, 900 mm ou 1000 mm.

11. L'adaptateur de tube (100, 200, 300) selon l'une des revendications précédentes, **caractérisé en ce que** le tube (10, 210, 310) est en plastique ou en métal.

12. Une utilisation d'un adaptateur de tube (100, 200, 300) selon l'une des revendications précédentes pour connecter un premier tube ou un alésage à un deuxième tube, dans lequel la première extrémité de tube de l'adaptateur de tube est insérée avec la gaine dans le premier tube ou dans un alésage, **caractérisée en ce que** la deuxième extrémité de tube (12, 212, 312) de l'adaptateur de tube (100, 200, 300) est connectée au deuxième tube, dans lequel
a) le deuxième tube a un manchon qui est emmanché sur la deuxième extrémité de tube (12, 212, 312) de l'adaptateur de tube (100, 200, 300), ou
b) une extrémité pointure du deuxième tube est connectée à la deuxième extrémité de tube (12, 212, 312) de l'adaptateur de tube (100, 200, 300) au moyen d'un double manchon, ou
c) une extrémité pointure du deuxième tube est connectée à la deuxième extrémité de tube (12, 212, 312) de l'adaptateur de tube au moyen d'un collet universel, d'un collet standard ou d'un raccord adaptateur, ou
d) le deuxième tube est connecté à la face intérieure de la deuxième extrémité de tube (12, 212, 312) de l'adaptateur de tube (100, 200, 300), en particulier au moyen d'une chaîne de liaison ou d'un collet interne.

13. Un kit of parts comprenant un adaptateur de tube (100, 200, 300) selon l'une des revendications 1 à 11 et un manuel d'instructions dans lequel au moins deux des types d'utilisation a), b), c) ou d) de la revendication 12 sont expliqués.

14. Une utilisation d'un adaptateur de tube (100, 200, 300) selon la revendication 6, dans lequel la première extrémité de tube de l'adaptateur de tube est insérée avec la première gaine dans le premier tube ou dans un alésage, dans lequel la deuxième extrémité de tube (12, 212, 312) de l'adaptateur de tube est connectée au deuxième tube, dans lequel la deuxième extrémité de tube de l'adaptateur de tube est insérée avec la deuxième gaine dans le deuxième tube ou dans un alésage.
